# EUROPÄISCHE PATENTSCHRIFT

(11) **EP 2 027 369 B1**
(45) Veröffentlichungstag und Bekanntmachung des Hinweises auf die Patenterteilung: **15.08.2012**
(21) Anmeldenummer: 07722416.0
(22) Anmeldetag: 11.05.2007
(51) Int. Cl.: F01L 9/04, H02K 37/14, H02K 26/00, F01L 1/18, F01L 1/46

(54) **ELEKTROMOTORISCHE EINRICHTUNG ZUR BETÄTIGUNG VON GASWECHSELVENTILEN**
ELECTROMOTIVE DEVICE FOR OPERATING GAS EXCHANGE VALVES
DISPOSITIF ÉLECTROMOTEUR UTILISÉ DANS DES SOUPAPES D'ÉCHANGE DES GAZ

(30) Priorität: 18.05.2006 DE 102006023652
(43) Veröffentlichungstag der Anmeldung: 25.02.2009
(73) Patentinhaber: Institut für Automatisierung und Informatik GmbH, 38855 Wernigerode (DE)
(72) Erfinder: BRAUNE, Steffen, 38855 Wernigerode (DE); KRAMER, Klaus-Dieter, 06536 Berga (DE)
(74) Vertreter: Fischer, Volker
(86) Internationale Anmeldenummer: PCT/DE2007/000867
(87) Internationale Veröffentlichungsnummer: WO 2007/134574

(56) Entgegenhaltungen:
- EP-A- 1 283 581
- EP-A- 1 362 985
- EP-A- 1 426 568
- WO-A-00/09865
- WO-A-2004/044391
- WO-A-2005/057060
- WO-A-2005/071817
- WO-A-2005/119019
- DE-A1- 10 251 043
- DE-A1- 19 860 451
- GB-A- 2 401 649
- JP-A- 8 177 536
- JP-A- 59 068 509
- JP-A- 2005 069 046
- US-A- 5 331 931
- US-A1- 2003 051 688

## Beschreibung

Die Erfindung betrifft eine elektromotorische Einrichtung zur Betätigung von Gaswechselventilen an nockenwellenlosen Verbrennungsmotoren.

Zur Ansteuerung benannter Ventile existiert eine Vielzahl technischer Lösungen, deren Gemeinsamkeiten im Vorhandensein von Anordnungen bestehen, deren beweglicher Teil die Ventilschäfte der Gaswechselventile in die gewünschten Positionen beim Gaseinlass- oder -ausstoß befördert. Hierbei werden an diese Anordnungen eine Reihe von Anforderungen gestellt, die die Exaktheit der Bewegungsabläufe, deren möglichst sanfte Beendigung in den Endpunkten (Soft-Landing-Problem) sowie eine möglichst hohe Stellgeschwindigkeit betreffen. Daneben sollen die Anordnungen zur Ventilbetätigung möglichst geringen Bauraum in Anspruch nehmen, energiearmen Betrieb ermöglichen, hohe Zuverlässigkeit garantieren und im Aufbau unkompliziert sein. Die bekannten Anordnungen entsprechen diesen Forderungen in unterschiedlicher Weise jeweils in Teilbereichen.

In der DE 197 35 375 C1 und DE 197 44 714 C1 werden elektromagnetische Aktuatoren zum Betätigen eines Gaswechselventils vorgeschlagen, deren Läufer (Anker), welche Kraft auf das Gaswechselventil ausüben, durch Elektromagneten in den Endlagen des Hubes gehalten werden und durch Federn von einer Endlage zur anderen bewegt werden. Nachteilig an diesen Anordnungen ist, dass die läuferpositionsabhängigen Kraftkurven eines Elektromagneten starke Nichtlinearitäten aufweisen, was insbesondere beim "Soft-Landing" durch starken Kraftanstieg Probleme verursacht. Weiterhin sind die vorgeschlagenen Anordnungen nicht oder nur bedingt in der Lage, Teilhübe auszuführen als auch das während des Betriebes sich ändernde Ventilspiel auszugleichen.

Die DE 101 42 670 C1 empfiehlt einen elektromechanischen Aktuator für einen Ventiltrieb, dessen Konstruktion das "Soft-Landing-Problem" u.a. durch einen vergrößerten Abstand zwischen Anker und Polfläche der Elektromagnete lösen soll. Unabhängig von der tatsächlichen Tauglichkeit der Lösung besitzt diese durch ihren rotationssymmetrischen Aufbau eine ungünstige Ausnutzung des vorhandenen Bauraumes. Weiterhin ist ein stromloses Halten in den Endlagen nicht möglich, was zu einer Erhöhung der Verlustleistung führt.

Eine weitere Lösung wird in der DE 101 26 211 A1 vorgeschlagen. Diese Lösung soll zwar eine Verbesserung der Zuverlässigkeit durch konstruktiv bedingte Minderung von Reibung und Verschleiß bewirken, der rotationssymmetrische Aufbau bewirkt aber wiederum eine ungünstige Ausnutzung des vorhandenen Bauraumes, der durch die Vielzahl übereinander angeordneter Magnete noch verschlechtert wird.

Auch die DE 101 25 767 C1 beinhaltet eine Lösung, mit der die Zuverlässigkeit eines Gaswechselventilantriebes gesteigert werden soll. Der dazu vorgeschlagene Aufbau einer Anordnung mit ringförmigen Magneten ist einerseits wenig raumsparend und andererseits aufwendig in der Fertigung.

Neben den auf linearer Bewegung basierenden elektrischen Ventilsteuerungen existieren Lösungen, bei denen elektrisch generierte rotatorische Bewegungen zur Ventilbewegung genutzt werden.

So werden beispielsweise in den US-Patentschriften US 5 331 931 C und US 5 873 335 C elektromotorisch wirkende Ventilsteuerungen eines Verbrennungsmotors gezeigt, bei denen die Drehbewegung eines Motors einen Ventilnocken bzw. einen Kurvenzylinder zur Bewegung des Ventilschaftes antreiben. In den vorgeschlagenen Lösungen verbirgt sich jedoch u.a. der Nachteil der auch in den Endpunkten der Ventilschaftbewegung notwendigen und elektrisch aufzubringenden Haltekräfte zum Offen- bzw. Geschlossenhalten des Ventils. Damit ist ein energiesparender Betrieb der Ventilsteuerung nicht möglich. Überdies ist mindestens die Lösung mit dem Kurvenzylinder einem besonders hohen Verschleiß ausgesetzt.

Auch in der EP 1 144 813 B1 wird eine elektrisch durch einen Segmentmotor erzeugte Ventilbewegung vorgeschlagen. Auch hier handelt es sich um eine aufwendige und raumgreifende Konstruktion. Ein zusätzlicher Nachteil besteht darin, dass zum stabilen Halten des Ventils in Endlage ein fester Anschlag vorhanden ist. Auf diese Weise wird ein Ventilspielausgleich mit impliziten Mitteln der Ventilsteuerung verhindert - zusätzliche Baugruppen zum Ausgleich sind notwendig.

Mit der GB 2 401 649 A wird ein elektromagnetischer Aktuator für die Betätigung von Tellerventilen vorgeschlagen, bei dem die Betätigung des Gaswechselventils desmodromisch erfolgt. Sowohl die Öffnungs- als auch Schließbewegung des Ventils werden durch die zwangsmäßige Verbindung des Ventilschaftendes mit dem Rotor des Aktuators durch diesen vorgegeben. Daher ist eine alternierende Betätigung eines weiteren Ventils ausgeschlossen. Bei der desmodromischen oder zwangsweisen Ventilsteuerung wird ohne Ventilfedern gearbeitet und auch die Schließbewegung zwangsgesteuert ausgeführt, wodurch ein größerer Aufwand an elektrischer Energie zur Ventilsteuerung anfällt als bei der Steuerung nur der Ventilöffnung durch einen elektromagnetischen Aktuator. Ein energiesparender Betrieb der elektrischen Ventilbetätigung ist also mit der Lösung der GB 2 401 649 A kaum möglich. Die EP 1362985 offenbart ein Ventilsystem.

Aus den Nachteilen der bekannten Lösungen ergibt sich daher die Aufgabe, eine elektromotorische Einrichtung zur Betätigung von Gaswechselventilen zu entwickeln, die eine einfache, verschleißarme und wenig Raum beanspruchende Konstruktion aufweist und in ihrer Funktion eine möglichst exakte Vorherbestimmung oder Steuerung des Betätigungsweges ermöglicht. Außerdem sollte die zu entwickelnde elektromotorische Einrichtung zur Betätigung von Gaswechselventilen einen energiesparenden Betrieb ermöglichen.

Diese Aufgabe wird durch die Gestaltung der elektromotorischen Einrichtung zur Betätigung von Gaswechselventilen gemäß den Merkmalen des Hauptanspruches gelöst. Im zugehörigen Unteranspruch wird eine besonders vorteilhafte Ausgestaltungen der Einrichtung beansprucht.

Dabei besteht das Wesen der Erfindung auch in der Ausgestaltung der Betätigungseinrichtung mittels Permanentmagnetmotor mit besonders geringem Verhältnis von Verlustleistung zu möglicher Beschleunigung der zu steuernden Ventilschäfte. Durch eine Gestaltung des Permanentmagnetmotors als Motor mit einem Läufer besonders geringen Durchmessers wird nicht nur ein kleiner Raumbedarf erreicht, sondern auch ein sehr geringes Trägheitsmoment, wodurch die bereits erwähnte hohe Beschleunigung resultiert. Auch für einen möglichst geringen Energiebedarf ist die massearme Gestaltung des Permanentmagnetmotors als Kernstück der erfindungsgemäßen elektromotorischen Einrichtung zur Betätigung von Gaswechselventilen wichtig.

Weiterhin ist es erfindungswesentlich, dass die bereits erwähnte Ausgestaltung des Permanentmagnetmotors die ebenfalls erfindungsgemäße Anordnung der Einrichtung quer zu Motorlängsachse ermöglicht, wodurch die Möglichkeit eröffnet wird, mehrere Einrichtungen zur Betätigung mehrerer Gaswechselventile nebeneinander anzuordnen, ohne in Raumnot zu kommen. Ebenso ist es erfindungsgemäß möglich, mit einer einzelnen elektromotorischen Einrichtung zur Betätigung von Gaswechselventilen jeweils mehrere Gaswechselventile entweder des gleichen oder eines benachbarten Zylinders zu betätigen, wodurch der Hardwareaufwand zur Steuerung der Gaswechselventile eines Verbrennungsmotors erheblich verringert, ggf. nahezu halbiert wird.

Ebenfalls von besonderer Bedeutung für die Erfindung ist es, dass die beanspruchte elektromotorische Einrichtung zur Betätigung von Gaswechselventilen zum Halten der Endlagen keine zusätzlichen Haltevorrichtungen benötigt, sondern durch den Permanentmagnetmotor und beigeordnete Federelemente ein energiearmes Verharren in den Endlagen erreicht wird. Auch hierdurch wird eine bedeutende Energieersparnis beim Betrieb der elektromotorischen Einrichtung zur Betätigung von Gaswechselventilen ermöglicht.

Für den Fall der Betätigung nur jeweils eines Gaswechselventils ist eine desmodromische Ventilsteuerung möglich.

Die klassische Ventilüberschneidung bleibt durch das Wirken der Erfindung unberührt.

Wichtiger Bestandteil des Wesens der Erfindung ist auch die Möglichkeit, durch die gewählte Anordnung ein temperatur- und verschleißbedingtes Ventilspiel durch die Beeinflussung des Steuerstroms des Reluktanzmotors auszugleichen.

Die elektromotorische Einrichtung zur Betätigung von Gaswechselventilen erlaubt auf die gleiche Weise die weitestgehend freie Einstellung von Ventilhubkurven und die Realisierung von Teilhüben. Dies ist insbesondere von Vorteil für das Soft-Landing und die Gemischaufbereitung, indem z.B. bei geringer Ventilöffnung durch die dann auftretende besonders hohe Einströmgeschwindigkeit eine sehr gute Durchmischung von Kraftstoff und Verbrennungsluft eintritt. Die Möglichkeit der Teilhübe reduziert die Gaswechselarbeit, was deutlich zur Effizienzerhöhung des Verbrennungsmotors beiträgt.

Schließlich lässt sich durch die schlanke Auslegung des rotationssymmetrischen Teils der elektromotorischen Einrichtung zur Betätigung von Gaswechselventilen eine sehr geringe Bauhöhe gegenüber bekannten Ventiltriebskomponenten erreichen.

Die Erfindung wird nachstehend an Ausführungsbeispielen näher erläutert. Dabei zeigen die zugehörigen Zeichnungen in
- Fig. 1:: eine Prinzipskizze eines Permanentmagnetmotors als rotatorischer Aktuator der erfindungsgemäßen elektromotorischen Einrichtung zur Betätigung von Gaswechselventilen,

- Fig. 2:: eine Prinzipskizze der erfindungsgemäßen elektromotorischen Einrichtung zur Betätigung von Gaswechselventilen an einem Zylinder eines Verbrennungsmotors - eine Draufsicht und eine Schnittdarstellung beinhaltend - und
- Fig. 3: eine Prinzipskizze der erfindungsgemäßen elektromotorischen Einrichtung zur Betätigung von Gaswechselventilen an zwei benachbarten Zylindern eines Verbrennungsmotors - eine Draufsicht und eine Schnittdarstellung beinhaltend.

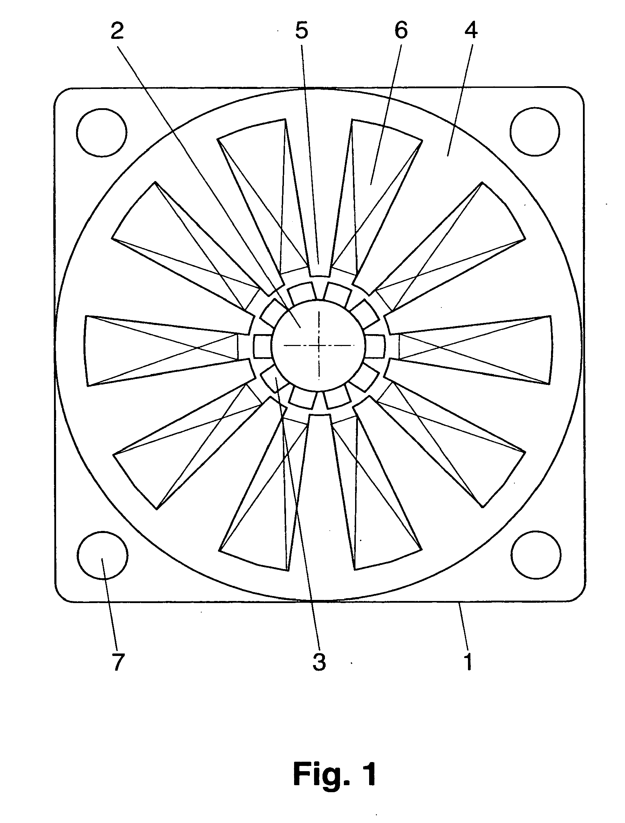

Gemäß Fig. 1 weist ein erfindungsgemäß verwendeter Permanentmagnetmotor 1 einen eisernen Rotor auf, der aus einer Rotorwelle 2 und alternierend magnetisierten Permanentmagnetsegmenten 3 besteht. Ein aus Magnetblechen zusammengesetzter Stator 4 des Permanentmagnetmotors 1 weist Pole 5 auf, zwischen denen sich Wicklungen 6 befinden. Statorbohrungen 7 dienen zur Befestigung des Permanentmagnetmotors 1.

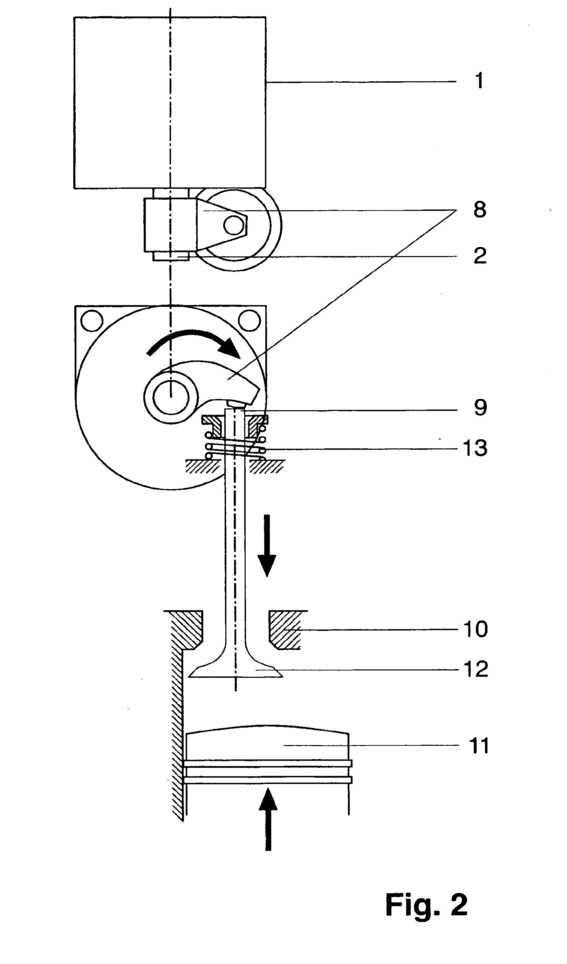

In Fig. 2 wird die erfindungsgemäße elektromotorische Einrichtung zur Betätigung von Gaswechselventilen an einem Zylinder 10 eines Verbrennungsmotors gezeigt. Dabei ist an der Rotorwelle 2 des als rotatorischen Aktuator dienenden Permanentmagnetmotors 1 ein Hebel 8 angeordnet, dessen achsfernes Ende auf das Ventilschaftende 9 eines zum Zylinder 11 eines Verbrennungsmotors gehörenden Gaswechselventiles 12 drückt.

Entsprechend der dem Permanentmagnetmotor 1 zugeführten Stromverläufe erfolgt also eine vorbestimmte Betätigung des Gaswechselventiles 12 im Sinne einer gesteuerten Öffnung bzw. eines ebenso gesteuerten Schließens durch Freigabe des Ventilschaftendes 9. Dabei wird durch eine auf das Ventilschaftende 9 wirkende Feder 13 die notwendige Schließkraft aufgebracht.

In einer besonders vorteilhaften Ausgestaltung kann die erfindungsgemäße elektromotorische Einrichtung zur Betätigung von Gaswechselventilen durch die Anordnung einer weiteren Feder energetisch optimiert werden, da sich das Gesamtsystem dann als Feder-Masse-Schwinger darstellt.

Der quer zur Motorlängsachse in schlanker Ausführung angeordnete Permanentmagnetmotor 1 nimmt als rotatorischer Aktuator zur Betätigung des Gaswechselventils 12 nur geringen Raum ein - entsprechend seiner dem Reluktanzprinzip folgenden Wirkungsweise kommt als weiterer Vorteil eine energiesparende Ventilbetätigung hinzu.

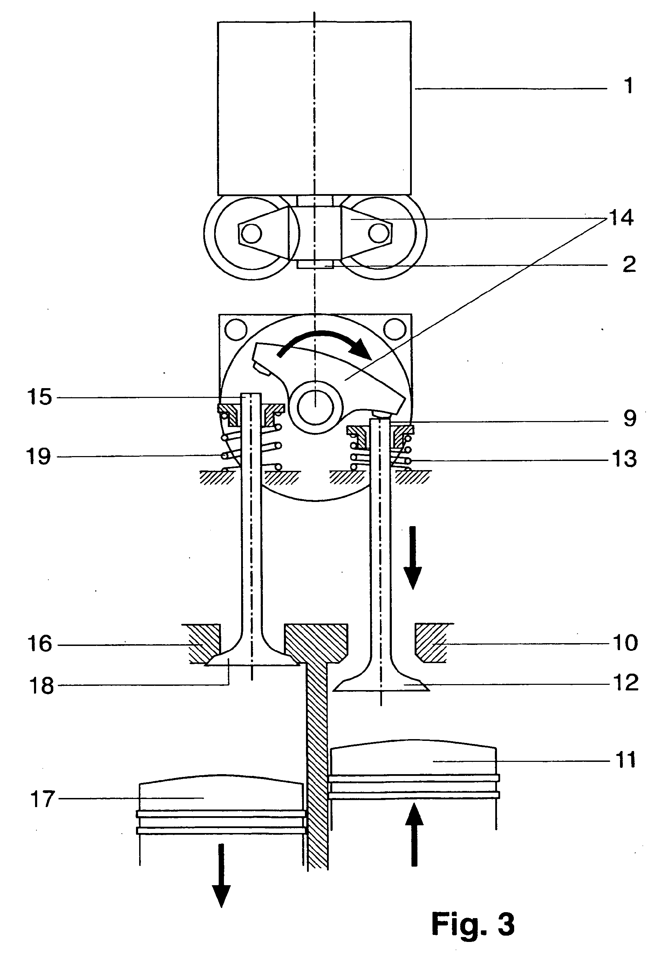

Besonders vorteilhaft wirkt die erfindungsgemäße elektromotorische Einrichtung zur Betätigung von Gaswechselventilen, wenn sie in einem weiteren Ausführungsbeispiel gem. Fig. 3 zur Betätigung von benachbarten Ventilen zweier Zylinder eines Verbrennungsmotors ausgeführt ist.

Gem. Fig. 3 ist wiederum ein Permanentmagnetmotor 1 zur Betätigung zweier Gaswechselventile 12 und 18 vorhanden, die sich in zwei Zylindern 10 und 16 mit Kolben 11 und 17 befinden. An der Rotorwelle 2 des Permanentmagnetmotors 1 ist ein Doppelhebel 14 angebracht, dessen Enden jeweils die Ventilschaftenden 9 und 15 der zwei Gaswechselventile 12 und 18 mit Betätigungskräften beaufschlagen können. Die Federn 9 und 19 liefern die Schließkräfte für die Gaswechselventile 12 und 18.

Der besondere Vorteil der Anordnung des zweiten Ausführungsbeispiels ist die durch nur einen rotatorischen Aktuator mögliche Betätigung von zwei Gaswechselventilen. Hierdurch tritt neben die reine Bauraumersparnis auch eine erhebliche Einsparung an Material-, Fertigungs- und Montageaufwand.

Die Permanent magnet motoren 1 der erfindungsgemäßen elektromotorischen Einrichtung zur Betätigung von Gaswechselventilen werden einphasig angesteuert. Das bietet den Vorteil, dass eine sehr einfache Ansteuerung möglich wird: Die einphasige Ansteuerung ermöglicht die Ausführung eines Ventilhubes ohne Umkehrung des Stromes, wobei während der Flugphase eine Absenkung des Stromes durch die Synchronmotoren 1 vorteilhaft ist. Auch dies trägt zu einem verlustarmen Ventilantrieb durch die Erfindung bei.

### Liste der Bezugs- und Formelzeichen

1 Permanentmagnetmotor
2 Rotorwelle
3 Permanentmagnetsegmente
4 Stator
5 Pol
6 Wicklung
7 Statorbohrung
8 Hebel
9 Ventilschaftende
10 Zylinder
11 Kolben
12 Gaswechselventil
13 Feder
14 Doppelhebel
15 Ventilschaftende
16 Zylinder
17 Kolben
18 Gaswechselventil
19 Feder

## Patentansprüche

1. Elektromotorische Einrichtung zur Betätigung von Gaswechselventilen an nockenwellenlosen Verbrennungsmotoren, deren Gaswechselventile durch Schließfedern geschlossen werden,
einen rotatorischen Aktuator aufweisend,
der über eine Hebelanordnung (8; 14) alternierend direkt Druckkräfte auf zwei oder mehrere Ventilschaftenden (9; 15) von zwei oder mehreren Gaswechselventilen (12; 18) ausübt, **dadurch gekennzeichnet, dass** der rotatorische Aktuator ats einphasiger Permanentmagnetmotor (1) ausgeführt ist,
der einen zylindrischen eisernen Rotor (2) aufweist,
auf dessen Umfang alternierend magnetisierte polbildende Permanentmagnetsegmente (3) so angeordnet sind, dass in ihrer Wechselwirkung mit den Polen (5) des Stators (4) des Permanentmagnetmotors (1) Rastmomente entstehen.

2. Elektromotorische Einrichtung zur Betätigung von Gaswechselventilen nach Anspruch 1,
bei der ein Ventilspielausgleich der Gaswechselventile (12; 18) durch Steuerung des Statorstromes des Permanentmagnetmotors (1) erfolgt.

## Claims

1. Electromotive device for operating gas exchange valves on internal combustion engines which do not have camshafts and of which the gas exchange valves are closed by closing springs, having a rotary actuator which alternately directly exerts pressure forces on two or more valve shaft ends (9; 15) of two of more gas exchange valves (12; 18) by means of a lever arrangement (8; 14), **characterized in that** the rotary actuator is designed as a single-phase permanent magnet motor (1) which has a cylindrical iron rotor (2), alternately magnetized pole-forming permanent magnet segments (3) being arranged over the circumference of the said rotor such that cogging torques are produced when said permanent magnet segments interact with the poles (5) of the stator (4) of the permanent magnet motor (1).

2. Electromotive device for operating gas exchange valves according to Claim 1, in which valve clearance compensation of the gas exchange valves (12; 18) is performed by controlling the stator current of the permanent magnet motor (1).

## Revendications

1. Dispositif électromoteur pour l'actionnement de soupapes d'échange de gaz sur des moteurs à combustion interne dépourvus d'arbre à cames dont les soupapes d'échange de gaz sont fermées par des ressorts de fermeture, présentant un actionneur rotatif qui, au moyen d'un système de leviers (8 ; 14), exerce directement et alternativement des forces de pression sur deux ou plusieurs extrémités de tiges de soupapes (9 ; 15) de deux ou plusieurs soupapes d'échange de gaz (12 ; 18), **caractérisé en ce que** l'actionneur rotatif est réalisé sous la forme d'un moteur monophasé à aimants permanents (1), qui présente un rotor en fer cylindrique (2) sur le pourtour duquel des segments d'aimants permanents (3) alternativement magnétisés, formant des pôles, sont disposés de telle sorte que leur interaction avec les pôles (5) du stator (4) du moteur à aimants permanents (1) crée des couples de détente.

2. Dispositif électromoteur pour l'actionnement de soupapes d'échange de gaz selon la revendication 1, dans lequel on effectue une compensation du jeu de soupape des soupapes d'alternance de gaz (12; 18) en commandant le courant de stator du moteur à aimants permanents (1).
